# EUROPEAN PATENT SPECIFICATION

(11) **EP 0 838 006 B1**
(45) Date of publication and mention of the grant of the patent: **29.09.2004**
(21) Application number: 96922159.7
(22) Date of filing: 05.07.1996
(51) Int. Cl.: F16L 37/084

(54) **PUSH-FIT TUBE COUPLINGS**
STECKROHRVERBINDUNG
ACCOUPLEMENTS DE TUBES PAR MONTAGE A FROTTEMENT DOUX

(30) Priority: 07.07.1995 GB 9513919; 22.12.1995 GB 9526370
(43) Date of publication of application: 29.04.1998
(73) Proprietor: MARLEY EXTRUSIONS LIMITED, Maidstone Kent, ME17 2DE (GB); Marley Tile AG, 6006 Lucerne (CH)
(72) Inventor: DUDLEY, Steven, John, Brighton, East Sussex BN1 3BD (GB)
(74) Representative: Butler, Michael John
(86) International application number: PCT/GB1996/001611
(87) International publication number: WO 1997/003314

(56) References cited:
- EP-A- 0 182 561
- EP-A- 0 196 881
- EP-A- 0 310 234
- EP-A- 0 542 003
- EP-A- 0 735 306
- WO-A-95/12781
- GB-A- 2 035 495
- GB-A- 2 066 914
- GB-A- 2 125 500
- GB-A- 2 166 508
- GB-A- 2 196 403
- GB-A- 2 197 410
- GB-A- 2 245 945
- US-A- 4 919 457
- US-A- 4 979 765

## Description

The present invention relates to push-fit tube couplings, and particularly but not exclusively to releasable couplings used for example in plumbing systems to connect together water pipes.

It is known to provide a tool in the form of a shim for releasing a tube gripping member within a coupling, the shim being pushed into the coupling and forced between the tube gripping member and the tube. However, this is usually of metal and relatively sharp, with the disadvantage that when used it damages the seal and the tube gripping member.

GB-A-2,035,495 discloses a coupling system in which a thin sleeve can be inserted into the coupling, extending between a grip ring and the outer surface of a tube so that there will be disengagement and the tube can be pulled out.

EP-A-0,542,003 discloses a coupling with a release mechanism operated by an external tool. In this arrangement, a grip ring is in the form of a fixed metal ring with spring tongues which engage the surface of a tube received in the coupling. A release sleeve is provided in the coupling, which can be used to push directly against the metal tongues to urge them away from the tube. The force necessary to achieve this is provided by an external spring loaded pliers type of tool which engages the release sleeve.

In BP-A-0,196,881 there is disclosed a tube coupling which incorporates a movable collet which fits around a tube within the coupling. The collet comprises a ring-shaped member that has a plurality of axially extending fingers which project into the tube coupling. In use, the internal pressure of the fluid in the tube tends to force the tube and the attached collet out of the tube coupling, and in so doing urges portions of the collet against an tapered cam surface at the entrance of the tube receiving bore in such a manner as to urge them inwardly. This increases the grip on the tube to prevent further withdrawal. The collet has tube engaging portions such as metal teeth.

To release the tube, the collet is pushed back into the tube coupling, away from the inclined surface, to release its grip and enable the tube to be pulled out Axially inwards movement of the tube is necessary to permit the tube engaging teeth to be released from the tube surface. One disadvantage with this coupling system is that the collet projects from the coupling, and may therefore be pushed in accidentally to release the seal, even after the plumbing installation has been completed.

In GB-A-2,166,508 there is disclosed, with reference for example to Figure 3, a tube coupling having a main body having a region defining a bore within the main body in which a tube is to be received, and also having an end portion, part of the end portion defining a mouth for the bore through which the tube passes; wherein: the bore is provided with a seal to seal around the outer surface of the tube; a tube gripping member is disposed between the seal and the mouth of the bore, the tube gripping member having tube engaging ends for gripping the outer surface of the tube; part of the end portion has a first surface which tapers radially inwardly in a direction from the inside of the coupling towards the mouth; the tube gripping member is movable axially within the coupling and has a radially outwardly directed second surface which cooperates with the first surface of the end portion, so that upon axial movement of the tube gripping member towards the mouth of the bore the engagement of the first and second surfaces urges the tube engaging ends of the tube gripping member radially inwards so as to increase the grip on the tube; and the tube gripping member has a third surface which is positioned radially outwards of the tube engaging ends; and wherein the system further comprises a release tool which is separate from the coupling and is adapted to be placed over the tube so as to at least partly encircle the tube and to be moved axially along the tube whereby an end portion of the release tool engages the third surface of the tube gripping member and, in response to the axial movement of the tool, the tube engaging ends are urged out of gripping engagement with the tube.

In GB-A-2,166,508 the release tool at least partly embraces the tube when in use, and includes three equally spaced unseating pins which extend axially. Three equally spaced apertures are provided extending from an end surface of the end portion of the coupling to the region where the tube gripping member is located. The pins of the release tool can be caused to extend through the apertures and act against the axially facing third surface on the tube gripping member. The tube gripping member is then pushed back with respect to the tapering first surface and the tube is thereby released.

Viewed from one aspect the present invention is characterised over GB-A-2,166,508 in that the end portion of the coupling comprises an end member which is not integral with the main body but is attached to one end of the main body, parts of the end member defining the mouth for the bore and the first surface; and in that the third surface of the tube gripping member is directed radially inwardly and tapers radially outwardly in a direction from the inside of the coupling towards the mouth, the arrangement being such that the interaction between the end portion of the release tool and the tapered third surface of the tube gripping member achieves a camming effect which positively urges the tube engaging ends radially outwards and out of gripping engagement with the tube.

In EP-A-0,735,306, which was not published before the filing date of the present application, there is disclosed a tube coupling system in which the third surface of the tube gripping member is directed radially inwardly and tapers radially outwardly in a direction from the inside of the coupling towards the mouth, the arrangement being such that the interaction between the end portion of the release tool and the tapered third surface of the tube gripping member achieves a camming effect which positively urges the tube engaging ends radially outwards and out of gripping engagement with the tube.

In EP-A-0,735,306 the main body comprises a body member and an end piece which are ultrasonically welded together. The end of the tube does not extend into a bore defined within the body member but abuts against a pipe stop provided on the body member. The tube is received only in a bore within the confines of the end piece. An end region of the end piece defines the mouth and the first surface which tapers radially inwardly in a direction from the inside of the coupling towards the mouth. The end region of the end piece is an integral part of the end piece.

The system of the present invention is novel over EP-A-0,73 5,306 as regards the nature of the main body and the end member. In EP-A-0,735,306 the body member does not have a region defining a bore within which a tube is to be received. The end piece defines a bore but the mouth and the first surface are defined by an integral end region of the end piece. There is not the characterising feature of the present invention that there is an end member which is not integral with the main body but is attached to one end of the main body, part of the end member defining a mouth for the bore through which the tube passes, and part of the end member having a first surface which tapers radially inwardly in a direction from the inside of the coupling towards the mouth.

Viewed from another aspect the present invention provides a method of releasing a tube from a coupling in a system in which the coupling has a main body which has a region defining a bore within the main body in which the tube is received, and also has an end portion, part of the end portion defining a mouth for the bore through which the tube passes; wherein: the bore is provided with a seal which seals around the outer surface of the tube received within the bore; a tube gripping member is disposed between the seal and the mouth of the bore, the tube gripping member having tube engaging ends for gripping the outer surface of the tube; part of the end portion has a first surface which tapers radially inwardly in a direction from the inside of the coupling towards the mouth; the tube gripping member is movable axially within the coupling and has a radially outwardly directed second surface which cooperates with the first surface of the end portion, so that upon axial movement of the tube gripping member towards the mouth of the bore the engagement of the first and second surfaces urges the tube engaging ends of the tube gripping member radially inwards so as to increase the grip on the tube; and the tube gripping member has a third surface which is positioned radially outwards of the tube engaging ends; and wherein the method comprises the steps of placing a release tool, which is separate from the coupling, over the tube so as to at least partly encircle the tube and moving the release tool axially along the tube whereby an end portion of the release tool engages the third surface of the tube gripping member and, in response to the axial movement of the release tool, the tube engaging ends are urged out of gripping engagement with the tube; the method being characterised over GB-A-2,166,508 in that the end portion of the coupling comprises an end member which is not integral with the main body but is attached to one end of the main body, parts of the end member defining the mouth for the bore and the first surface; in that the third surface of the tube gripping member is directed radially inwardly and tapers radially outwardly in a direction from the inside of the coupling towards the mouth and further characterised in that the interaction between the end portion of the release tool and the tapered third surface of the tube gripping member achieves a camming effect which positively urges the tube engaging ends radially outwards and out of gripping engagement with the tube.

The tapered third surface of the tube gripping member may be inclined or curved or have any appropriate profile, for example being frusto-conical. Where the tube gripping member comprises a number of gripping elements such as legs, the third surface may be provided on some or all of the legs. The third surface may be provided around substantially the entire periphery of the tube gripping member. The end portion of the release tool may be tapered.

It is possible for the tube to be released from the coupling without damaging the tube gripping member or the seal. The release tool does not have to be inserted between the tube and the tube engaging ends, where it could cause damage and/or become stuck.

The release tool encircles or partly encircles the tube. In a preferred embodiment, the release tool is sleeve-like and is slid along the outer surface of the tube into the tube coupling. As the release tool enters the tube coupling, the end portion of the release tool urges against the frusto-conical third surface located on the tube gripping member, causing the tube gripping member to release its grip on the tube. The tube may then be pulled free from the tube coupling or adjusted.

The release tool is readily removable from the tube, and this may be done in a lateral direction with respect to the tube. In one preferred form the release tool is in the form of a tubular member whose inner diameter is slightly larger than the outer diameter of the tube. To permit installation and removal of the tool, the tubular member preferably consists of two parts which are hinged together or are separable. In one embodiment the split tubular member is resilient, and can be opened up and then snapped around the tube.

In one preferred embodiment, the tubular member constituting the release tool has an axially extending gap when positioned around a tube, so that it can be adjusted. For example it may be closed up somewhat to match the reduced diameter of the tube gripping member in the coupling. Circumferential ribs may be provided on the outer surface of the tool to make it easier for the user to push it along the surface of the tube.

In one possible arrangement, a tube retained in the coupling will be spaced from the mouth of the coupling around its circumference, to permit access for the release tool. However, in such an arrangement there is the disadvantage that the tube is not supported in this region. Accordingly, a plurality of inwardly directed projections may be provided in the region of the mouth of the coupling, to provide support for the tube. For example, three, four or more projections may be spaced at suitable intervals around the circumference. The release tool is configured to have portions which pass along the free spaces between the projections. These portions may be defined by providing the release tool with axially extending slots which match the positions of the projections.

The release tool may be provided as an item which can be used as desired with any coupling. However, each coupling could also be provided with a release tool already in place. This would be used as necessary during fitting of the coupling, to permit adjustments to be made. It would then be removable from the coupling. To some extent the coupling would initially be similar to a coupling in accordance with EP -A-0,196,881. However, the release tool would be removable. In such an arrangement the release tool could initially be connected to the tube gripping member by readily frangible means which will prevent loss of the release tool during shipping and handling but will permit easy removal of the tool after installation so as to create a system in accordance with the invention which has a separate release tool. The tool can then be replaced and used as necessary. Alternatively, other retaining means could be employed such as resilient portions which engage detents or the like, to resist loss of the tool.

In the preferred embodiments the tube gripping member is in the form of a collet or split ring which is movable axially within the coupling and cooperates with the tapering second surface in the region of the mouth of the coupling to be urged inwardly to grip the tube. In such an arrangement the seal could act on the tube gripping member directly, but in a preferred embodiment it acts through an intermediate member such as a thrust washer which engages the tube gripping member.

Preferably the tube gripping member in embodiments of the invention comprises a plurality of radially inwardly projecting portions. These may be formed so as to be inclined towards the axis of the tube receiving bore when no tube is present. In its preferred form, the tube gripping member comprises a ring having a plurality of teeth which can be urged inwardly to grip the tube.

In its preferred form, the tube gripping member comprises a ring having a plurality of teeth, which extend generally radially therefrom, somewhat inclined, towards the axis of the ring. The inner surfaces of these teeth, when in their relaxed state, preferably lie on a circle whose diameter is smaller than that of the tube which is to be inserted, so that the teeth may support the tube in its correct position within the tube coupling.

In a preferred embodiment, the tube gripping member comprises a moulded plastics body, which is reinforced with an inner metal ring. Preferably the inner metal ring has a plurality of portions which are arranged to project slightly from the plastics body. These projecting portions provide teeth which can engage the outer surface of the tube, thereby securing the tube more firmly within the tube coupling regardless of the type of tube material. In one preferred arrangement the tube gripping member is in the form of a split ring whose diameter can therefore increase and decrease. The split ring has a number or radially extending partial slits around its inner circumference. The moulded plastics body provides the third surface for engagement with the release tool, and also the second surface for cooperation with the first surface in the region of the mouth of the coupling. Thus it will be provided with a radially inwardly facing inclined surface around its inner circumference and also a radially outwardly facing inclined surface around its outer circumference.

Preferably the seal is an O-ring type seal. In such embodiments, the preferred thrust washer may be provided to prevent parts of the O-ring sticking through gaps in the tube gripping member as a result of creep in the O-ring material, and avoids the tube gripping member damaging the O-ring.

In some embodiments, a second (or more if necessary) seal is additionally provided, separated from the first seal by a washer

If the material of the tube is relatively soft, a tube insert comprising a close-fitting tubular sleeve of metal or plastics may be fitted within the tube, which can withstand the grip pressures of the tube gripping member.

Another aspect of the invention provides a tube coupling having a main body having a region defining a bore within the main body in which a tube is received in use, and also having an end portion, part of the end portion defining a mouth for the bore through which the tube passes; wherein: the bore is provided with a seal to seal around the outer surface of the tube; a tube gripping member in the form of a split ring is disposed between the seal and the mouth of the bore, the tube gripping member being contained entirely within the body and having tube engaging ends for gripping the outer surface of the tube; part of the end portion has a first surface which tapers radially inwardly in a direction from the inside of the coupling towards the mouth; the tube gripping member is movable axially within the coupling and has a radially outwardly directed second surface which tapers radially inwardly in the direction from the inside of the coupling towards the mouth, the second surface cooperating with the first surface of the end portion, so that upon axial movement of the tube gripping member towards the mouth of the bore the engagement of the first and second surfaces urges the tube engaging ends of the tube gripping member radially inwards so as to increase the grip on the tube; and the tube gripping member has a third surface which is positioned radially outwards of the tube engaging ends; and wherein the arrangement is such that in use a release tool, which is separate from the coupling, can be placed over a tube so as to at least partly encircle the tube and can be moved axially along the tube so that an end portion of the release tool engages the third surface of the tube gripping member and so that, in response to the axial movement of the release tool, the tube engaging ends are urged out of gripping engagement with the tube; this aspect of the invention being characterised over GB-A-2,166,508 in that the end portion of the coupling comprises an end member which is not integral with the main body but is attached to one end of the main body, parts of the end member defining the mouth for the bore and the first surface; in that the third surface of the tube gripping member is directed radially inwardly and tapers radially outwardly in a direction from the inside of the coupling towards the mouth; in that the tube gripping member, comprises a resilient plastics body in which is embedded a metallic insert which provides circumferentially spaced metal teeth projecting from the plastics body to form the tube engaging ends, the plastics body having, on the side facing the mouth, the radially outwardly directed second surface around its outer circumference and the radially inwardly directed third surface around its inner circumference; and being further characterised in that the arrangement is such that in use the interaction between the end portion of the release tool and the tapered third surface of the tube gripping member achieves a camming effect which positively urges the tube engaging ends radially outwards and out of gripping engagement with the tube.

Some preferred embodiments of the present invention will now be described by way of example only and with reference to the accompanying drawings, in which:
Figure 1 is an external view of a coupling in accordance with the invention;
Figure 2 is a section through one end of the coupling;
Figure 3 is a plan view of tube gripping member used in the coupling;
Figure 4 is a partial detailed view of the tube gripping member,
Figure 5 is an end view of a mouth of the coupling, with other components omitted for clarity;
Figure 6 is a section through a release tool;
Figure 7 is an end view of the release tool;
Figure 8 is a section through one end of the coupling with a tube in place;
Figure 9 is a section through one end of the coupling showing the release tool being used to remove the tube; and
Figure 10 is a section through one end of an alternative coupling.

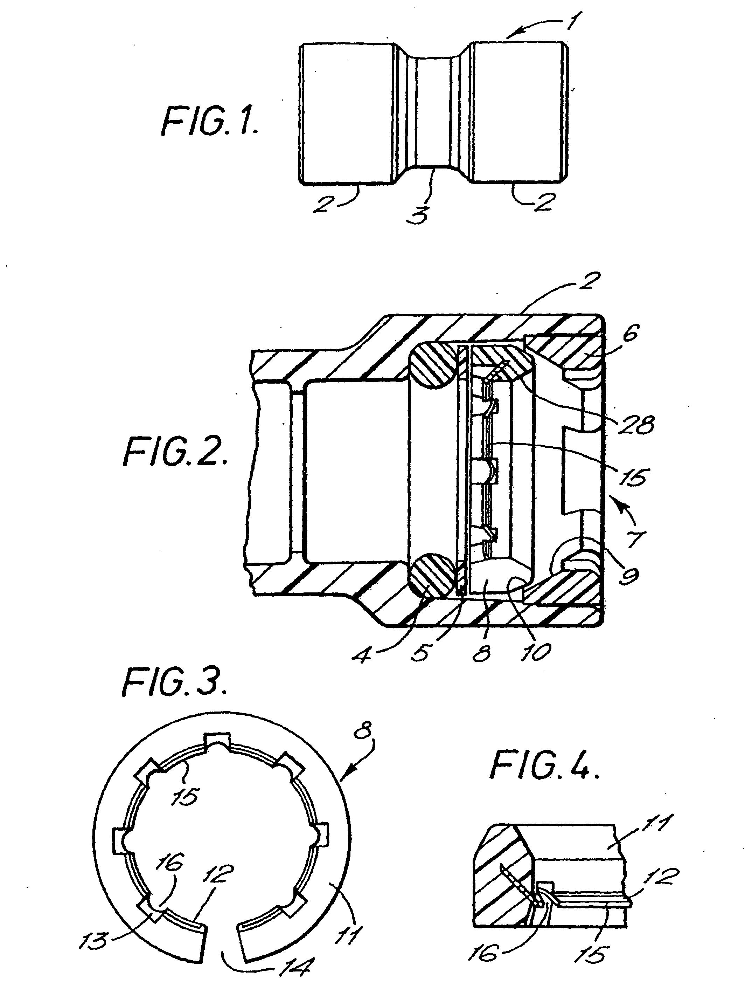

In Figures 1 and 2, there is shown a preferred embodiment of the tube coupling. The tube coupling has a hollow main body 1 which is generally tubular in section, has openings at either end and has enlarged end regions 2 interconnected by a smaller diameter middle section 3. This coupling is made of a suitable plastics material and is used to join e.g. pipes together in a plumbing system.

As shown in Figure 2, within each enlarged end region 2 is provided an O-ring seal 4 and a thrust washer 5. An end piece 6 is secured in the opening 7 of portion 2, e.g. by bonding or welding or mechanical means. Between the washer 5 and end piece 6 is provided a split ring 8. This split ring is axially movable, together with the seal 4 and washer 5. The end piece 6 is provided with a frusto-conical tapering surface 9 facing the split ring 8, and the split ring has a frusto-conical surface 10 arranged to engage the tapering surface 9 of the end piece. As the split ring 8 is moved axially towards the end piece 6, there is an increasing inwardly directed force on the split ring, caused by the interaction of the two frusto-conical surfaces.

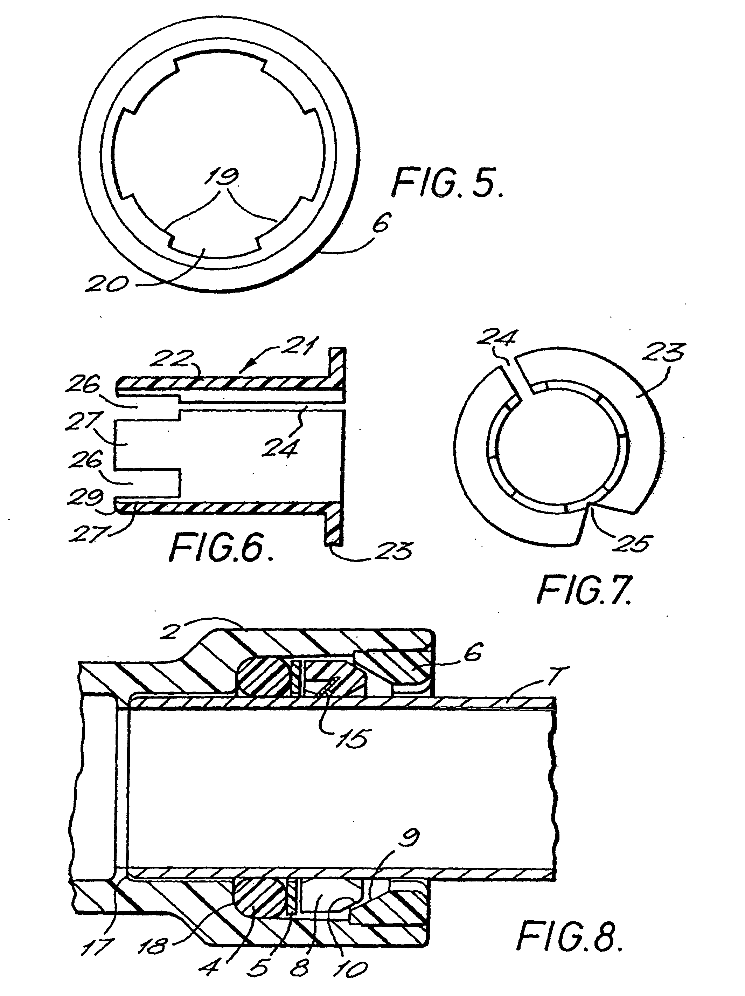

The split ring 8, as shown in more detail in Figures 3 and 4 comprises a moulded resilient plastics body 11 in which is embedded a metal insert 12 of spring steel or another suitable material. The body 11 is provided with notches 13 at intervals around its inner circumference, and a gap 14. The metal insert 12 projects slightly from the body, to provide metal teeth 15, which are separated by notches 16 lining up with the notches 13 of the plastics body. As shown in Figure 4 the metal insert is inclined with respect to the body 11 and when in position as in Figure 2, the teeth 15 point at an angle towards the interior of the coupling and towards its axis.

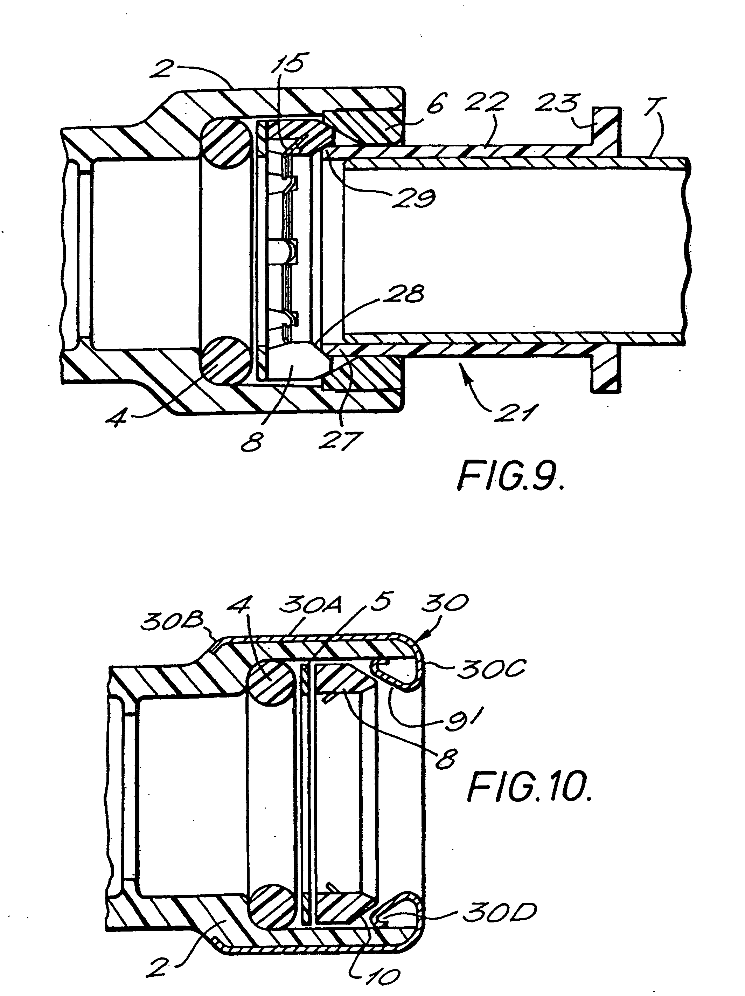

In use, as shown in Figure 8, a tube T such as a plumbing pipe has been pushed into the coupling, passing through the opening 7 in end piece 6 into the bore defined within the body 1. The tube engages the seal 4 in a sealing manner. The tube also passes through the split ring 8 and is engaged by the inwardly facing teeth 15 which restrain movement out again. The teeth may dig into the outer surface of the tube by a certain extent. The tube is pushed in until it encounters a stop 17. Inwards movement of the seal is restrained by a stop 18.

When there is an outward force on the tube T, the split ring 8 engages the end piece 6 to resist the movement. This outward force may come from pulling on the tube T or from the pressure of fluid with the coupling acting on O- ring 4, which acts on the split ring 8 through the washer 5. The cooperation between the frusto-conical surfaces 9 and 10 provides an inwardly directed force which increases the grip on the tube T.

As shown in Figure 5, the end piece 6 is provided with four equally spaced projections 19 which are directed radially inwardly in the region of the opening 7. These provide support for the tube T in this region. Between the projections 19 are defined slots 20, which permit access for a release tool 21.

The release tool 21 is shown in more detail in Figures 6 and 7. It consists of a generally cylindrical, hollow body 22 of moulded plastics. This has a flange 23 at one end to assist manipulation. The tool is split into two halves by a longitudinal slot 24 and is hinged along a longitudinal line 25 opposite the slot, the flange 23 being provided with a V shaped notch in the region of the hinge line. The hinge is a plastic hinge integrally formed with the release tool, which is therefore of one piece construction in this embodiment. The tool can be opened out and placed around the tube T, outside of the coupling, and then closes up under its own resilience. The body 22 of the tool is provided with four longitudinal slots 26, defining four legs 27 which can therefore pass along the slots 20 defined in the end piece 6, to engage the split ring 8 as shown in Figure 9, where the slots of the tool have been omitted for clarity. A user simply pushes on the flange 23 to achieve this.

The ends of the four legs 27 of the tool are rounded or otherwise suitably profiled as shown at 29, and engage a further frusto-conical surface 28 on the split ring, which points radially inwardly. The split ring is urged axially inwards and at the same time there is a force positively urging the split ring to expand, caused by the interaction of the ends 29 of the tool legs 27 and the surface 28. This camming effect releases the teeth 15 from the tube T which, as shown in Figure 9, can then be withdrawn. As will be seen, the release tool engages the surface 28 at a position radially outwardly from the surface of the tube T, and remote from the gripping teeth 15. The release tool does not have to pass between the gripping teeth 15 and the tube. There is no damage to the seal, split ring , tube or any other component. After adjustment the tool can be removed and the tube T pushed home again.

The tool may be supplied already installed in a new coupling, but will still be removable by pulling it from the coupling and opening the two halves apart. Such a tool might be shorter in the axial direction, for convenience.

Figure 10 shows a modified coupling. In this the plastic end piece 6 has been replaced by a metallic cap 30 of stainless steel or another suitable material such as brass. This is of tubular construction, having a main tubular portion 30A which fits tightly around the body 2. This is crimped into the body around its circumference, at 30B. At its other end, it is rolled over at 30C around its circumference to provide an end cap and the tapering surface 9'. It is finished off by being turned over at 30D.

This construction is strong and yet compact, and enables thinner sections of plastic to be used. In operation it works in the same manner as the previous embodiment.

Thus, in these embodiments there is provided a simple, compact construction with effective gripping of the tube using a novel split ring, and with a release tool which can be readily used to remove the pipe from the coupling in a re-usable fashion.

## Claims

1. A tube coupling system comprising a coupling and a tube (T), the coupling having a main body (1) which has a region (2) defining a bore within the main body in which the tube (T) is received, and also having an end portion (6; 30), part of the end portion defining a mouth (7) for the bore through which the tube passes; wherein:
the bore is provided with a seal (4) to seal around the outer surface of the tube (T); a tube gripping member (8) is disposed between the seal and the mouth of the bore, the tube gripping member having tube engaging ends (15) for gripping the outer surface of the tube; part of the end portion (6; 30) has a first surface (9; 9') which tapers radially inwardly in a direction from the inside of the coupling towards the mouth (7); the tube gripping member (8) is movable axially within the coupling and has a radially outwardly directed second surface (10) which cooperates with the first surface (9; 9') of the end portion, so that upon axial movement of the tube gripping member towards the mouth (7) of the bore the engagement of the first and second surfaces urges the tube engaging ends (15) of the tube gripping member radially inwards so as to increase the grip on the tube; and the tube gripping member (8) has a third surface (28) which is positioned radially outwards of the tube engaging ends (15); and wherein the system further comprises a release tool (21) which is separate from the coupling and is adapted to be placed over the tube (T) so as to at least partly encircle the tube and to be moved axially along the tube (T) whereby an end portion (29) of the release tool (21) engages the third surface (28) of the tube gripping member (8) and, in response to the axial movement of the tool, the tube engaging ends (15) are urged out of gripping engagement with the tube;
**characterised in that** the end portion of the coupling comprises an end member (6; 30) which is not integral with the main body (1) but is attached to one end of the main body, parts of the end member (6; 30) defining the mouth (7) for the bore and the first surface (9; 9'); and **in that** the third surface (28) of the tube gripping member (8) is directed radially inwardly and tapers radially outwardly in a direction from the inside of the coupling towards the mouth (7), the arrangement being such that the interaction between the end portion (29) of the release tool (21) and the tapered third surface (28) of the tube gripping member (8) achieves a camming effect which positively urges the tube engaging ends (15) radially outwards and out of gripping engagement with the tube (T).

2. A system as claimed in claim 1, **characterised in that** the release tool (21) is arranged to substantially surround the tube (T) when positioned over the tube.

3. A system as claimed in claim 1 or 2, **characterised in that** the release tool (21) comprises an at least partly tubular member (22) having at one end the end portion (29) for engaging the third surface (28) of the tube gripping member (8).

4. A system as claimed in claim 3, **characterised in that**, at the end remote from the end portion (29), the at least partly tubular member (22) has a flange (23) to assist manipulation of the release tool (21).

5. A system as claimed in claim 3 or 4, **characterised in that** the inner diameter of the at least partly tubular member (22) is slightly larger than the outer diameter of the tube (T).

6. A system as claimed in claim 5, **characterised in that** the at least partly tubular member (22) is adapted to be slid along the outer surface of the tube (T) in the axial direction, in use.

7. A system as claimed in any preceding claim, **characterised in that** the release tool (21) may be placed over or removed from the tube (T) in a lateral direction.

8. A system as claimed in claim 7, **characterised in that** the release tool (21) comprises two parts which are movable between an open state in which the release tool may be placed over and removed from the tube (T), and a closed state in which the tool, when positioned over the tube, may be moved axially along the tube (T).

9. A system as claimed in claim 8, **characterised in that** the two parts of the release tool (21) are hinged together.

10. A system as claimed in any preceding claim, **characterised in that** the release tool (21) has an axially extending slot (24).

11. A system as claimed in any preceding claim, **characterised in that** the arrangement is such that a tube (T) retained in the coupling will be spaced from the mouth (7) of the coupling to permit access into the coupling by the release tool (21).

12. A system as claimed in claim 11, **characterised in that** the mouth (7) of the coupling is provided with a plurality of inwardly directed projections (19) to provide support for the tube (T), and **in that** the release tool (21) comprises a plurality of legs (27) for passing through spaces (20) between the projections (19).

13. A system as claimed in any preceding claim, **characterised in that** the third surface (28) of the tube gripping member (8) is frusto-conical.

14. A system as claimed in any preceding claim, **characterised in that** the seal (4) is movable axially.

15. A system as claimed in claim 14, **characterised in that** a washer (5) is arranged between the seal (4) and tube gripping member (8).

16. A system as claimed in any preceding claim, **characterised in that** the tube gripping member (8) is in the form of a split ring.

17. A system as claimed in claim 16, **characterised in that** the tube gripping member (8) comprises a resilient plastics body (1) on which the second surface (10) and third surface (28) are provided, and a metal insert (12) within the plastics body (11) which has projecting metal teeth (15) which define the tube engaging ends.

18. A system as claimed in claim 17, **characterised in that** when the tube gripping member (8) is in the relaxed state the tube engaging ends of the metal teeth (15) lie on a circle whose diameter is smaller than the outer diameter of the tube (T).

19. A system as claimed in claim 17 or 18, **characterised in that** the metal teeth (15) are inclined in a direction towards the interior of the coupling.

20. A system as claimed in any preceding claim, **characterised in that** the second surface (10) of the tube gripping member (8) tapers radially inwardly in a direction from the inside of the coupling towards the mouth (7).

21. A system as claimed in claim 20, **characterised in that** the second surface (10) of the tube gripping member (8) is frusto-conical.

22. A system as claimed in any of claims 1 to 12, **characterised in that** the tube gripping member (8) is in the form of a split ring comprising a resilient plastics body (11) in which is embedded a metallic insert (12) which provides circumferentially spaced metal teeth (15) projecting from the plastics body to form the tube engaging ends, the plastics body (11) having, on the side facing the mouth (7), the radially outwardly directed second surface (10) around its outer circumference and the radially inwardly directed third surface (28) around its inner circumference, the second surface (10) tapering radially inwardly in the direction from the inside of the coupling towards the mouth (7).

23. A method of releasing a tube (T) from a coupling in a system in which the coupling has a main body (1) which has a region (2) defining a bore within the main body in which the tube (T) is received, and also has an end portion (6; 30), part of the end portion defining a mouth (7) for the bore through which the tube passes; wherein:
the bore is provided with a seal (4) which seals around the outer surface of the tube (T) received within the bore; a tube gripping member (8) is disposed between the seal and the mouth of the bore, the tube gripping member having tube engaging ends (15) for gripping the outer surface of the tube; part of the end portion (6; 30) has a first surface (9; 9') which tapers radially inwardly in a direction from the inside of the coupling towards the mouth (7); the tube gripping member (8) is movable axially within the coupling and has a radially outwardly directed second surface (10) which cooperates with the first surface (9; 9') of the end portion, so that upon axial movement of the tube gripping member towards the mouth (7) of the bore the engagement of the first and second surfaces urges the tube engaging ends (15) of the tube gripping member radially inwards so as to increase the grip on the tube; and the tube gripping member (8) has a third surface (28) which is positioned radially outwards of the tube engaging ends (15);
and wherein the method comprises the steps of placing a release tool (21), which is separate from the coupling, over the tube (T) so as to at least partly encircle the tube and moving the release tool (21) axially along the tube (T) whereby an end portion (29) of the release tool (21) engages the third surface (28) of the tube gripping member (8) and, in response to the axial movement of the release tool, the tube engaging ends (15) are urged out of gripping engagement with the tube.
**characterised in that** the end portion of the coupling comprises an end member (6; 30) which is not integral with the main body (1) but is attached to one end of the main body, parts of the end member (6; 30) defining the mouth (7) for the bore and the first surface (9, 9'); **in that** the third surface (28) of the tube gripping member (8) is directed radially inwardly and tapers radially outwardly in a direction from the inside of the coupling towards the mouth (7); and further **characterised in that** the interaction between the end portion (29) of the release tool (21) and the tapered third surface (28) of the tube gripping member (8) achieves a camming effect which positively urges the tube engaging ends (15) radially outwards and out of gripping engagement with the tube (T).

24. A method as claimed in claim 23, **characterised in that** the release tool (21) substantially surrounds the tube (T).

25. A method as claimed in claim 23 or 24, **characterised in that** the release tool (21) comprises an at least partly tubular member (22) whose inner diameter is slightly larger than the outer diameter of the tube (T), and the at least partly tubular member (22) is slid along the outer surface of the tube (T) in the axial direction.

26. A method as claimed in claim 23, 24 or 25, **characterised in that** the release tool (21) is placed over the tube (T) in a lateral direction.

27. A method as claimed in claim 26, **characterised in that** the release tool (21) comprises two parts which are moved between an open state in which the release tool is placed over the tube (T), and a closed state in which the tool at least partly encircles the tube (T).

28. A method as claimed in any of claims 23 to 27, **characterised in that** the tube (T) is spaced from the mouth (7) of the coupling to permit access into the coupling by the release tool (21).

29. A method as claimed in claim 23, characterised that the method is carried out with a system as claimed in any of claims 1 to 22.

30. A tube coupling having a main body (1) having a region (2) defining a bore within the main body in which a tube (T) is received in use, and also having an end portion (6; 30), part of the end portion defining a mouth (7) for the bore through which the tube passes; wherein:
the bore is provided with a seal (4) to seal around the outer surface of the tube (T); a tube gripping member (8) in the form of a split ring is disposed between the seal and the mouth of the bore, the tube gripping member being contained entirely within the body (1) and having tube engaging ends (15) for gripping the outer surface of the tube; part of the end portion (6; 30) has a first surface (9; 9') which tapers radially inwardly in a direction from the inside of the coupling towards the mouth (7); the tube gripping member (8) is movable axially within the coupling and has a radially outwardly directed second surface (10) which tapers radially inwardly in the direction from the inside of the coupling towards the mouth (7), the second surface (10) cooperating with the first surface (9; 9') of the end portion, so that upon axial movement of the tube gripping member towards the mouth (7) of the bore the engagement of the first and second surfaces urges the tube engaging ends (15) of the tube gripping member radially inwards so as to increase the grip on the tube; and the tube gripping member (8) has a third surface (28) which is positioned radially outwards of the tube engaging ends (15); and wherein the arrangement is such that in use a release tool (21), which is separate from the coupling, can be placed over a tube (T) so as to at least partly encircle the tube and can be moved axially along the tube (T) so that an end portion (29) of the release tool (21) engages the third surface (28) of the tube gripping member (8) and so that, in response to the axial movement of the release tool, the tube engaging ends (15) are urged out of gripping engagement with the tube;
**characterised in that** the end portion of the coupling comprises an end member (6; 30) which is not integral with the main body (1) but is attached to one end of the main body, parts of the end member (6; 30) defining the mouth (7) for the bore and the first surface (9, 9'); **in that** the third surface (28) of the tube gripping member (8) is directed radially inwardly and tapers radially outwardly in a direction from the inside of the coupling towards the mouth (7); **in that** the tube gripping member (8) comprises a resilient plastics body (11) in which is embedded a metallic insert (12) which provides circumferentially spaced metal teeth (15) projecting from the plastics body to form the tube engaging ends, the plastics body (11) having, on the side facing the mouth (7), the radially outwardly directed second surface (10) around its outer circumference and the radially inwardly directed third surface (28) around its inner circumference;
and further **characterised in that** the arrangement is such that in use the interaction between the end portion (29) of the release tool (21) and the tapered third surface (28) of the tube gripping member (8) achieves a camming effect which positively urges the tube engaging ends (15) radially outwards and out of gripping engagement with the tube (T).

31. A tube coupling as claimed in claim 30, **characterised in that** the mouth (7) of the coupling is provided with a plurality of inwardly directed projections (19) to provide support for the tube (T), the projections (19) being separated by spaces (20) for receiving legs (27) of the release tool (21)..

32. A tube coupling as claimed in claim 30 or 31, **characterised in that** the first surface (9; 9'), second surface (10) and third surface (28) are frusto-conical.

33. A tube coupling as claimed in claim 30, 31 or 32, **characterised in that** the plastics body (11) is provided with a plurality of radially extending notches (13) spaced around its inner circumference, the metal teeth (15) being provided on portions of the plastics body (11) between the notches (13).

34. A tube coupling as claimed in claim 33, **characterised in that** a part of the third surface (28) is provided on each of the portions of the plastics body (11) between the notches (13)

## Patentansprüche

1. Röhrenkopplungssystem mit einer Kopplung und einem Rohr bzw, einer Röhre (T), wobei die Kopplung einen Hauptkörper (1) aufweist mit einem Bereich (2), der eine Bohrung in dem Hauptkörper definiert, in die die Röhre (T) aufgenommen ist, und ebenfalls einen Endabschnitt (6, 30) aufweist, wobei ein Teil des Endabschnitts eine Öffnung (7) für die Bohrung definiert, durch die die Röhre ragt, wobei:
die Bohrung mit einer Abdichtung bzw. Versiegelung (4) versehen ist, um um die äußere Oberfläche der Röhre (T) herum abzudichten, ein Röhrenklemmelement (8) zwischen der Abdichtung und der Öffnung der Bohrung angeordnet ist, wobei das Röhrenklemmelement Röhreneingreifenden (15) zum Greifen bzw. Klemmen der äußeren Oberfläche der Röhre aufweist, ein Teil des Endabschnitts (6, 30) eine erste Oberfläche (9, 9') aufweist, die sich radial nach innen in einer Richtung von der Innenseite der Kopplung zu der öffnung (7) verjüngt, das Röhrenklemmelement (8) axial innerhalb der Kopplung bewegbar ist und eine radial nach außen gerichtete zweite Oberfläche (10) aufweist, die mit der ersten Oberfläche (9, 9') des Endabschnitts zusammenwirkt, so daß bei einer axialen Bewegung des Röhrenklemmelements zu der Öffnung (7) der Bohrung der Eingriff der ersten und der zweiten Oberfläche die Röhreneingreifenden (15) des Röhrenklemmelements radial nach innen drückt, um den Griff auf die Röhre zu erhöhen, und wobei das Röhrenklemmelement (8) eine dritte oberfläche (28) aufweist, die radial nach außen von den Röhreneingreifenden (15) positioniert ist, und wobei das System weiterhin ein Lösewerkzeug (21) aufweist, das von der Kopplung getrennt und ausgelegt ist, um über die Röhre (T) plaziert zu werden, um zumindest teilweise die Röhre zu umgeben und um axial entlang der Röhre (T) bewegt zu werden, wobei ein Endabschnitt (29) des Lösewerkzeugs (21) an die dritte Oberfläche (28) des Röhrenklemmelements (8) angreift und als Reaktion auf die axiale Bewegung des Werkzeugs die Röhreneingreifenden (15) aus dem Klemmeingriff mit der Röhre gedrückt werden,
**dadurch gekennzeichnet, daß** der Endabschnitt der Kopplung ein Endelement (6, 30) aufweist, das nicht Bestandteil des Hauptkörpers (1) ist aber an einem Ende des Hauptkörpers angebracht ist, wobei Teile des Endelements (6, 30) die Öffnung (7) für die Bohrung und die erste Oberfläche (9, 9') definieren und daß die dritte Oberfläche (28) des Röhrenklemmelements (8) radial nach innen gerichtet ist und sich radial nach außen in einer Richtung von der Innenseite der Kopplung zu der Öffnung (7) verjüngt, wobei die Anordnung so ist, daß die Wechselwirkung zwischen dem Endabschnitt (29) des Lösewerkzeugs (21) und der verjüngten dritten Oberfläche (28) des Röhrenklemmelements (8) einen Eingriff bewirkt, der die Röhreneingreifenden (15) radial nach außen und aus dem Klemmeingriff mit der Röhre (T) bestimmt drückt.

2. System nach Anspruch 1, **dadurch gekennzeichnet, daß** das Lösewerkzeug (21) im wesentlichen um die Röhre (T) angeordnet ist, wenn dieses über der Röhre positioniert ist.

3. System nach Anspruch 1 oder 2, **dadurch gekennzeichnet**, däß das Lösewerkzeug (21) ein zumindest teilweises röhrenförmiges Element (22) aufweist, das an einem Ende den Endabschnitt (29) zum Eingreifen an die dritte Oberfläche (28) des Röhrenklemmelements (8) hat.

4. System nach Anspruch 3, **dadurch gekennzeichnet, daß** an dem Ende entfernt von dem Endabschnitt (29) das zumindest teilweise röhrenförmige Element (22) einen Flansch (23) aufweist, um eine Handhabung des Lösewerkzeugs (21) zu unterstützen.

5. System nach Anspruch 3 oder 4, **dadurch gekennzeichnet, daß** der Innendurchmesser des zumindest teilweise röhrenförmigen Elements (22) geringfügig größer als der Außendurchmesser der Röhre (T) ist.,

6. System nach Anspruch 5, **dadurch gekennzeichnet, daß** das zumindest teilweise röhrenförmige Element (22) ausgelegt ist, um bei Gebrauch entlang der äußeren Oberfläche der Röhre (T) in der axialen Richtung geschoben zu werden.

7. System nach einem der vorstehenden Ansprüche, **dadurch gekennzeichnete daß** das Lösewerkzeug (21) in einer lateralen Richtung über der Röhre (T) plaziert werden kann oder von dieser entfernt werden kann.

8. System nach Anspruch 7, **dadurch gekennzeichnet, daß** das Lösewerkzeug (21) zwei Teile aufweist, die zwischen einem geöffneten Zustand, in dem das Lösewerkzeug über der Röhre (T) plaziert werden kann oder von dieser entfernt werden kann, und einem geschlossenen Zustand, in dem das Werkzeug, wenn es über der Röhre positioniert ist, axial entlang der Röhre (T) bewegt werden kann, bewegbar sind.

9. System nach Anspruch 8, **dadurch gekennzeichnet, daß** die beiden Teile des Lösewerkzeugs (21) gelenkig miteinander verbunden sind.

10. System nach einem der vorstehenden Ansprüche, **dadurch gekennzeichnet, daß** das Lösewerkzeug (21) einen sich axial erstreckenden Schlitz (24) aufweist.

11. System nach einem der vorstehenden Ansprüche, **dadurch gekennzeichnet, daß** die Anordnung derart ist, daß eine Röhre (T), die in der Kopplung gehalten ist, von der Öffnung (7) der Kopplung beabstandet ist, um einen Zugriff in die Kopplung durch das Lösewerkzeug (21) zu ermöglichen.

12. System nach Anspruch 11, **dadurch gekennzeichnet, daß** die Öffnung (7) der Kopplung mit einer Mehrzahl von nach innen gerichteten Vorsprüngen (19) versehen ist, um eine Unterstützung bzw, einen Halt für die Röhre (T) bereitzustellen, und daß das Lösewerkzeug (21) eine Mehrzahl von Schenkeln (27) aufweist, die zum Durchreichen durch Räume (20) zwischen den Vorsprüngen (19) vorgesehen sind.

13. System nach einem der vorstehenden Ansprüche, **dadurch gekennzeichnet, daß** die dritte Oberfläche (28) des Röhrenklemmelements (8) kegelstumpfartig ist.

14. System nach einem der vorstehenden Ansprüche, **dadurch gekennzeichnet, daß** die Abdichtung (4) axial bewegbar ist.

15. System nach Anspruch 14, **dadurch gekennzeichnet, daß** eine Unterlegscheibe (5) zwischen der Abdichtung (4) und dem Röhrenklemmelement (8) angeordnet ist.

16. System nach einem der vorstehenden Ansprüche, **dadurch gekennzeichnet, daß** das Röhrenklemmelement (8) in Form eines Spaltrings vorliegt.

17. System nach Anspruch 16, **dadurch gekennzeichnet, daß** das Röhrenklemmelement (8) einen elastischen Plastikkörper (1) aufweist, auf dem die zweite Oberfläche (10) und die dritte Oberfläche (28) vorgesehen sind, und einen Metalleinsatz (12) innerhalb des Plastikkörpers (11), der vorspringende Metallzähne (15) aufweist, die die Röhreneingreifenden definieren.

18. System nach Anspruch 17, **dadurch gekennzeichnet, daß** wenn das Röhrenklemmelement (8) in dem entspannten Zustand ist, die Röhreneingreifenden der Metallzähne (15) auf einem Kreis liegen, dessen Durchmesser geringer ist als der Außendurchmesser der Röhre (T).

19. System nach Anspruch 17 oder 18, **dadurch gekennzeichnet, daß** die Metallzähne (15) in einer Richtung zu dem Inneren der Kopplung geneigt sind.

20. System nach einem der vorstehenden Ansprüche, **dadurch gekennzeichnet, daß** die zweite Oberfläche (10) des Röhrenklemmelements (8) sich radial nach innen in einer Richtung von der Innenseite der Kopplung zu der Öffnung (7) verjüngt.

21. System nach Anspruch 20, **dadurch gekennzeichnet, daß** die zweite Oberfläche (10) des Röhrenklemmelements (8) kegelstumpfartig ist.

22. System nach einem der Ansprüche 1 bis 12, **dadurch gekennzeichnet, daß** das Röhrenklemmelement (8) in Form eines Spaltrings vorliegt, der einen elastischen Plastikkörper (11) aufweist, in den ein metallischer Einsatz (12) eingebettet ist, der im Umfang beabstandete Metallzähne (15) bereitstellt, die von dem Plastikkörper hervorragen, um die Röhreneingreifenden zu bilden, wobei der Plastikkörper (11) auf der der Öffnung (7) zugewandten Seite die radial nach außen gerichtete zweite Oberfläche (10) um seinen äußeren Umfang aufweist und die radial nach innen gerichtete dritte Oberfläche (28) um seinen inneren Umfang, wobei die zweite Oberfläche (10) sich radial nach innen in der Richtung von der Innenseite der Kopplung zu der Öffnung (7) verjüngt.

23. Verfahren zum Lösen einer Röhre (T) von einer Kopplung in einem System, in dem die Kopplung einen Hauptkörper (1) aufweist mit einem Bereich (2), der eine Bohrung in dem Hauptkörper definiert, in dem die Röhre (T) aufgenommen ist, und ebenfalls einen Endabschnitt (6, 30) aufweist, wobei ein Teil des Endabschnitts eine Öffnung (7) für die Bohrung definiert, durch die die Röhre ragt, wobei:
die Bohrung mit einer Abdichtung (4) versehen ist, die um die äußere Oberfläche der Röhre (T) herum abdichtet, die innerhalb der Bohrung aufgenommen ist, ein Röhrenklemmelement (8) zwischen der Abdichtung und der Öffnung der Bohrung angeordnet ist, wobei das Röhrenklemmelement Röhreneingreifenden (15) für ein Klemmen der äußeren Oberfläche der Röhre aufweist, ein Teil des Endabschnitts (6, 30) eine erste Oberfläche (9, 9') aufweist, die sich radial nach innen in einer Richtung von der Innenseite der Kopplung zu der öffnung (7) verjüngt, das Röhrenklemmelement (8) axial innerhalb der Kopplung bewegbar ist und eine radial nach außen gerichtete zweite Oberfläche (10) aufweist, die mit der ersten Oberfläche (9, 9') des Endabschnitts zusammenwirkt, so daß bei einer axialen Bewegung des Röhrenklemmelements zu der Öffnung (7) der Bohrung der Eingriff der ersten und der zweiten Oberfläche die Röhreneingreifenden (15) des Röhrenklemmelements radial nach innen drücken, um die Klemmwirkung bzw. den Griff auf die Röhre zu erhöhen, und wobei das Röhrenklemmelement (8) eine dritte Oberfläche (28) aufweist, die radial nach außen von den Röhreneingreifenden (15) positioniert ist, und wobei das Verfahren den Schritt des Plazierens eines Lösewerkzeugs (21) umfaßt, das von der Kopplung getrennt ist, über der Röhre (T), um zumindest teilweise die Röhre zu umgeben, und den Schritt des Bewegens des Lösewerkzeugs (21) axial entlang der Röhre (T), wobei ein Endabschnitt (29) des Lösewerkzeugs (21) an die dritte Oberfläche (28) des Röhrenklemmelements (8) angreift und als Reaktion auf die axiale Bewegung des Lösewerkzeugs die Röhreneingreifenden (15) aus dem Klemmeingriff mit der Röhre gedrückt werden,
**dadurch gekennzeichnet, daß** der Endabschnitt der Kopplung ein Endelement (6, 30) aufweist, das nicht Bestandteil des Hauptkörpers (1) ist aber an einem Ende des Hauptkörpers angebracht ist, wobei Teile des Endelements (6, 30) die öffnung (7) für die Bohrung und die erste Oberfläche (9, 9') definieren, und daß die dritte Oberfläche (28) des Röhrenklemmelements (8) radial nach innen gerichtet ist und sich radial nach außen in einer Richtung von der Innenseite der Kopplung zu der Öffnung (7) verjüngt, und weiterhin **dadurch gekennzeichnet, daß** die Wechselwirkung zwischen dem Endabschnitt (29) des Lösewerkzeugs (21) und der verjüngten dritten Oberfläche (28) des Röhrenklemmelements (8) einen Eingriff bewirkt, der die Röhreneingreifenden (15) radial nach außen und aus dem Klemmeingriff mit der Röhre (T) bestimmt drückt.

24. Verfahren nach Anspruch 23, **dadurch gekennzeichnet, daß** das Lösewerkzeug (21) im wesentlichen die Röhre (T) umgibt.

25. Verfahren nach Anspruch 23 oder 24, **dadurch gekennzeichnet, daß** das Lösewerkzeug (21) ein zumindest teilweise röhrenförmiges Element (22) aufweist, dessen Innendurchmesser geringfügig größer als der Außendurchmesser der Röhre (T) ist und das zumindest teilweise röhrenförmige Element (22) entlang der äußeren Oberfläche der Röhre (T) in der axialen Richtung geschoben wird.

26. Verfahren nach Anspruch 23, 24 oder 25, **dadurch gekennzeichnet, daß** das Lösewerkzeug (21) über der Röhre (T) in einer lateralen Richtung plaziert ist.

27. Verfahren nach Anspruch 26, **dadurch gekennzeichnet, daß** das Lösewerkzeug (21) zwei Teile aufweist, die zwischen einem geöffneten Zustand, in dem das Lösewerkzeug über der Röhre (T) plaziert ist, und einem geschlossenen Zustand, in dem das Werkzeug zumindest teilweise die Röhre (T) umgibt, bewegt werden.

28. Verfahren nach einem der Ansprüche 23 bis 27, **dadurch gekennzeichnet, daß** die Röhre (T) von der öffnung (T) der Kopplung beabstandet ist, um einen Zugriff in die Kopplung durch das Lösewerkzeug (21) zu ermöglichen.

29. Verfahren nach Anspruch 23, **dadurch gekennzeichnet, daß** das Verfahren mit einem System nach einem der Ansprüche 1 bis 22 durchgeführt wird.

30. Röhrenkopplung mit einem Hauptkörper (1), der einen Bereich (2) aufweist, der eine Bohrung in dem Hauptkörper definiert, in der eine Röhre (T) bei Gebrauch aufgenommen ist und ebenfalls einen Endabschnitt (6, 30) aufweist, wobei ein Teil des Endabschnitts eine Öffnung (7) für die Bohrung definiert, durch die die Röhre ragt, wobei:
die Bohrung mit einer Abdichtung (4) versehen ist, um um die äußere Oberfläche der Röhre (T) herum abzudichten, ein Röhrenklemmelement (8) in Form eines Spaltrings zwischen der Abdichtung und der Öffnung der Bohrung angeordnet ist, wobei das Röhrenklemmelement vollständig innerhalb des Körpers (1) enthalten ist und Röhreneingreifenden (15) zum Klemmen der äußeren Oberfläche der Röhre aufweist, ein Teil des Endabschnitts (6, 30) eine erste Oberfläche (9, 9') aufweist, die sich radial nach innen in einer Richtung von der Innenseite der Kopplung zu der Öffnung (7) verjüngt, das Röhrenklemmelement (8) axial innerhalb der Kopplung bewegbar ist und eine radial nach außen gerichtete zweite Oberfläche (10) aufweist, die sich radial nach innen in der Richtung von der Innenseite der Kopplung zu der Öffnung (7) verjüngt, wobei die zweite Oberfläche (10) mit der ersten Oberfläche (9, 9') des Endabschnitts zusammenwirkt, so daß bei einer axialen Bewegung des Röhrenklemmelements zu der Öffnung (7) der Bohrung der Eingriff der ersten und der zweiten Oberfläche die Röhreneingreifenden (15) des Röhrenklemmelements radial nach innen drückt, um die Klemmwirkung bzw. den Griff auf die Röhre zu erhöhen, und wobei das Röhrenklemmelement (8) eine dritte Oberfläche (28) aufweist, die radial nach außen von den Röhreneingreifenden (15) positioniert ist, und wobei die Anordnung derart ist, daß bei Gebrauch ein Lösewerkzeug (21), das von der Kopplung getrennt ist, über einer Röhre (T) plaziert werden kann, um zumindest teilweise die Röhre zu umgeben, und axial entlang der Röhre (T) bewegt werden kann, so daß ein Endabschnitt (29) des Lösewerkzeugs (21) an die dritte Oberfläche (28) des Röhrenklemmelements (8) greift und so daß als Reaktion auf die axiale Bewegung des Lösewerkzeugs die Röhreneingreifenden (25) aus einem Klemmeingriff mit der Röhre gedrückt werden.
**dadurch gekennzeichnet, daß** der Endabschnitt der Kopplung ein Endelement (6, 30) aufweist, das nicht Bestandteil des Hauptkörpers (1) ist, aber an einem Ende des Hauptkörpers angebracht ist, wobei Teile des Endelements (6, 30) die öffnung (7) für die Bohrung und die erste Oberfläche (9, 9') definieren, und daß die dritte Oberfläche (28) des Röhrenklemmelements (8) radial nach innen gerichtet ist und sich radial nach außen in einer Richtung von der Innenseite der Kopplung zu der öffnung (7) verjüngt, und daß das Röhrenklemmelement (8) einen elastischen Plastikkörper (11) aufweist, in dem ein metallischer Einsatz (12) eingebettet ist, der im Umfang beabstandete Metallzähne (15) bereitstellt, die von dem Plastikkörper hervorragen, um die Röhreneingreifenden zu bilden, wobei der Plastikkörper (11) an der der Öffnung (7) zugewandten Seite die radial nach außen gerichtete zweite Oberfläche (10) um seinen äußeren Umfang aufweist und die radial nach innen gerichtete dritte Oberfläche (28) um seinen inneren Umfang,
und weiterhin **dadurch gekennzeichnet, daß** die Anordnung derart ist, daß bei Gebrauch die Wechselwirkung zwischen dem Endabschnitt (29) des Lösewerkzeugs (21) und der verjüngten dritten Oberfläche (28) des Röhrenklemmelements (8) einen Eingriff bewirkt, der die Röhrenenden (15) radial nach außen und aus dem Klemmeingriff mit der Röhre (T) bestimmt drückt.

31. Röhrenkopplung nach Anspruch 30, **dadurch gekennzeichnet, daß** die Öffnung (7) der Kopplung mit einer Mehrzahl von nach innen gerichteten Vorsprüngen (19) versehen ist, um eine Unterstützung bzw. einen Halt für die Röhre (T) bereitzustellen, wobei die Vorsprünge (19) durch Räume (20) zur Aufnahme von Schenkeln (27) des Lösewerkzeugs (21) getrennt sind.

32. Röhrenkopplung nach Anspruch 30 oder 31, **dadurch gekennzeichnet, daß** die erste Oberfläche (9, 9'), die zweite Oberfläche (10) und die dritte Oberfläche (28) kegelstumpfartig sind.

33. Röhrenkopplung nach Anspruch 30, 31 oder 32, **dadurch gekennzeichnet, daß** der Plastikkörper (11) mit einer Mehrzahl von sich radial erstreckenden Kerben (13) versehen ist, die um seinen inneren Umfang beabstandet sind, wobei die Metallzähne (15) auf Abschnitten des Plastikkörpers (11) zwischen den Kerben (13) vorgesehen sind.

34. Röhrenkopplung nach Anspruch 33, **dadurch gekennzeichnet, daß** ein Teil der dritten Oberfläche (28) auf jedem der Abschnitte des Plastikkörpers (11) zwischen den Kerben (13) vorgesehen ist.

## Revendications

1. Système de couplage de tube comprenant un couplage et un tube (T), le couplage comportant un corps principal (1) qui possède une région (2) définissant un alésage dans le corps principal dans lequel le tube (T) vient se loger, et qui possède également une partie d'extrémité (6 ; 30) dont une partie définit une embouchure (7) pour l'alésage à travers lequel le tube passe ; dans lequel :
l'alésage comporte un joint (4) pour assurer l'étanchéité autour de la surface externe du tube (T) ; un élément de saisie de tube (8) est disposé entre le joint et l'embouchure de l'alésage, l'élément de saisie de tube ayant des extrémités (15) entrant en contact avec le tube afin de saisir la surface externe du tube ; une partie de la partie d'extrémité (6 ; 30) possède une première surface (9 ; 9') qui se rétrécit radialement vers l'intérieur dans la direction allant de l'intérieur du couplage vers l'embouchure (7) ; l'élément de saisie de tube (8) peut se déplacer axialement dans le couplage et possède une seconde surface (10) orientée radialement vers l'extérieur qui entre en interaction avec la première surface (9 ; 9') de la partie d'extrémité de sorte que, lors d'un mouvement axial de l'élément de saisie de tube en direction de l'embouchure (7) de l'alésage, le contact entre les première et seconde surfaces pousse les extrémités (15) entrant en contact avec le tube de l'élément de saisie de tube radialement vers l'intérieur de façon à accroître la prise sur le tube ; et l'élément de saisie de tube (8) possède une troisième surface (28) qui est placée radialement vers l'extérieur des extrémités (15) entrant en contact avec le tube ; et dans lequel le système comprend en outre un instrument de libération (21) qui est distinct du couplage et qui vient se placer sur le tube (T) de manière à encercler au moins partiellement le tube et qui se déplace axialement le long du tube (T), une partie d'extrémité (29) de l'instrument de libération (21) entrant en contact avec la troisième surface (28) de l'élément de saisie de tube (8) et, en réponse au mouvement axial de l'instrument, les extrémités (15) entrant en contact avec le tube ne sont plus en prise avec le tube ;
**caractérisé en ce que** la partie d'extrémité du couplage comprend un élément d'extrémité (6 ; 30) qui ne fait pas partie intégrante du corps principal (1) mais qui est attaché à une extrémité du corps principal, des parties de l'élément d'extrémité (6 ; 30) définissant l'embouchure (7) de l'alésage et la première surface (9 ; 9') ; et **en ce que** la troisième surface (28) de l'élément de saisie de tube (8) est orientée radialement vers l'intérieur et se rétrécit vers l'extérieur dans une direction allant de l'intérieur du couplage vers l'embouchure, la disposition étant telle que l'interaction entre la partie d'extrémité (29) de l'instrument de libération (21) et la troisième surface se rétrécissant (28) de l'élément de saisie de tube (8) permet d'obtenir un effet de came qui pousse positivement les extrémités (15) entrant en contact avec le tube radialement vers l'extérieur et hors de prise avec le tube (T).

2. Système, tel que revendiqué dans la revendication 1, **caractérisé en ce que** l'instrument de libération (21) est disposé de manière à entourer essentiellement le tube (T) lorsqu'il est placé sur le tube.

3. Système, tel que revendiqué dans la revendication 1 ou 2, **caractérisé en ce que** l'instrument de libération (21) comprend un élément au moins partiellement tubulaire (22) comportant, à une extrémité, la partie d'extrémité (29) entrant en contact avec la troisième surface (28) de l'élément de saisie de tube (8).

4. Système, tel que revendiqué dans la revendication 3, **caractérisé en ce que**, au niveau de l'extrémité éloignée de la partie d'extrémité, l'élément au moins partiellement tubulaire (22) possède un flanc (23) qui facilite la manipulation de l'instrument de libération (21).

5. Système, tel que revendiqué dans la revendication 3 ou 4, **caractérisé en ce que** le diamètre interne de l'élément au moins partiellement tubulaire (22) est légèrement plus important que le diamètre externe du tube (T).

6. Système, tel que revendiqué dans la revendication 5, **caractérisé en ce que** l'élément au mpins partiellement tubulaire (22) est conçu pour être coulissé le long de la surface externe du tube (T) dans le sens axial lors de l'utilisation.

7. Système, tel que revendiqué dans l'une quelconque des revendications précédentes, **caractérisé en ce que** l'instrument de libération (21) peut être placé sur le tube (T) ou retiré de ce dernier dans le sens latéral.

8. Système, tel que revendiqué dans la revendication 5, **caractérisé en ce que** l'instrument de libération (21) comprend deux parties qui peuvent passer d'un état ouvert, où l'instrument de libération peut être placé sur le tube (T) et retiré de ce dernier, à un état fermé où l'instrument, lorsqu'il est placé sur le tube, peut être déplacé axialement le long du tube (T).

9. Système, tel que revendiqué dans la revendication 5, **caractérisé en ce que** les deux parties de l'instrument de libération (21) sont articulées l'une à l'autre.

10. Système, tel que revendiqué dans l'une quelconque des revendications précédentes, **caractérisé en ce que** l'instrument de libération (21) comporte une fente s'étendant axialement (24).

11. Système, tel que revendiqué dans l'une quelconque des revendications précédentes, **caractérisé en ce que** la disposition est telle qu'un tube (T) retenu dans le couplage sera espacé de l'embouchure (7) du couplage de façon à permettre l'accès dans le couplage à l'aide de l'instrument de libération (21).

12. Système, tel que revendiqué dans la revendication 11, **caractérisé en ce que** l'embouchure (7) du couplage comporte plusieurs protubérances (19) dirigées vers l'intérieur et offrant un support au tube (T), et **en ce que** l'instrument de libération (21) comprend plusieurs pattes (27) qui passent à travers les espaces (20) entre les protubérances (19).

13. Système, tel que revendiqué dans l'une quelconque des revendications précédentes, **caractérisé en ce que** la troisième surface (28) de l'élément de saisie de tube (8) est en forme de cône tronqué.

14. Système, tel que revendiqué dans l'une quelconque des revendications précédentes, **caractérisé en ce que** le joint (4) peut se déplacer axialement.

15. Système, tel que revendiqué dans la revendication 14, **caractérisé en ce qu'**une rondelle (5) est disposée entre le joint (4) et l'élément de saisie de tube (8).

16. Système, tel que revendiqué dans l'une quelconque des revendications précédentes, **caractérisé en ce que** l'élément de saisie de tube (8) se présente sous forme d'un anneau fendu.

17. Système, tel que revendiqué dans la revendication 16, **caractérisé en ce que** l'élément de saisie de tube (8) comprend un corps plastique résilient (1) sur lequel se trouvent la seconde surface (10) et la troisième surface (28), ainsi qu'un insert métallique (12) disposé dans le corps plastique (11) et comportant des dents métalliques protubérantes (15) qui définissent les extrémités entrant en contact avec le tube.

18. Système, tel que revendiqué dans la revendication 17, **caractérisé en ce que**, lorsque l'élément de saisie de tube (8) est à l'état relâché, les extrémités entrant en contact avec le tube des dents métalliques (15) se situent sur un cercle dont le diamètre est inférieur au diamètre externe du tube (T).

19. Système, tel que revendiqué dans la revendication 17 ou 18, **caractérisé en ce que** les dents métalliques (15) sont inclinées vers l'intérieur du couplage.

20. Système, tel que revendiqué dans l'une quelconque des revendications précédentes, **caractérisé en ce que** la seconde surface (10) de l'élément de saisie de tube (8) se rétrécit radialement vers l'intérieur dans une direction allant de l'intérieur du couplage vers l'embouchure (7).

21. Système, tel que revendiqué dans la revendication 17 ou 20, **caractérisé en ce que** la seconde surface (10) de l'élément de saisie de tube (8) est en forme de cône tronqué.

22. Système, tel que revendiqué dans l'une quelconque des revendications 1 à 12, **caractérisé en ce que** l'élément de saisie de tube (8) se présente sous forme d'un anneau fendu comprenant un corps plastique résilient (11) dans lequel est noyé un insert métallique (12) formant des dents métalliques espacées circonférentiellement (15) qui dépassent du corps plastique de manière à former les extrémités entrant en contact avec le tube, le corps plastique (11) comprenant, du côté faisant face à l'embouchure (7), la seconde surface orientée radialement vers l'extérieur (10) autour de sa circonférence externe et la troisième surface orientée radialement vers l'intérieur (28) autour de sa circonférence interne, la seconde surface (10) se rétrécissant radialement vers l'intérieur dans la direction allant de l'intérieur du couplage vers l'embouchure (7).

23. Procédé de libération d'un tube (T) d'un couplage dans un système où le couplage comprend un corps principal (1) qui possède une région (2) définissant un alésage dans le corps principal dans lequel le tube (T) vient se loger, et qui possède également une partie d'extrémité (6 ; 30) dont une partie définit une embouchure (7) pour l'alésage à travers lequel le tube passe ; dans lequel :
l'alésage comporte un joint (4) pour assurer l'étanchéité autour de la surface externe du tube (T) reçu dans l'alésage ; un élément de saisie de tube (8) est disposé entre le joint et l'embouchure de l'alésage, l'élément de saisie de tube ayant des extrémités (15) entrant en contact avec le tube afin de saisir la surface externe du tube ; une partie de la partie d'extrémité (6 ; 30) possède une première surface (9 ; 9') qui se rétrécit radialement vers l'intérieur dans la direction allant de l'intérieur du couplage vers l'embouchure (7) ; l'élément de saisie de tube (8) peut se déplacer axialement dans le couplage et possède une seconde surface (10) orientée radialement vers l'extérieur qui entre en interaction avec la première surface (9 ; 9') de la partie d'extrémité de sorte que, lors d'un mouvement axial de l'élément de saisie de tube en direction de l'embouchure (7) de l'alésage, le contact entre les première et seconde surfaces pousse les extrémités (15) entrant en contact avec le tube de l'élément de saisie de tube radialement vers l'intérieur de façon à accroître la prise sur le tube ; et l'élément de saisie de tube (8) possède une troisième surface (28) qui est placée radialement vers l'extérieur des extrémités (15) entrant en contact avec le tube ;
et dans lequel le procédé comprend des étapes consistant à placer un instrument de libération (21), qui est distinct du couplage, au dessus du tube (T) de manière à encercler en partie au moins le tube et à déplacer axialement l'instrument de libération (21) le long du tube (T) de sorte qu'une partie d'extrémité (29) de l'instrument de libération (21) entre en contact avec la troisième surface (28) de l'élément de saisie de tube (8) et, en réponse au mouvement axial de l'instrument de libération, que les extrémités (15) entrant en contact avec le tube ne soient plus en prise avec le tube ;
**caractérisé en ce que** la partie d'extrémité du couplage comprend un élément d'extrémité (6 ; 30) qui ne fait pas partie intégrante du corps principal (1) mais qui est attaché à une extrémité du corps principal, des parties de l'élément d'extrémité (6 ; 30) définissant l'embouchure (7) de l'alésage et la première surface (9 ; 9') ; **en ce que** la troisième surface (28) de l'élément de saisie de tube (8) est orientée radialement vers l'intérieur et se rétrécit radialement vers l'extérieur dans une direction allant de l'intérieur du couplage vers l'embouchure ; et **en ce que** l'interaction entre la partie d'extrémité (29) de l'instrument de libération (21) et la troisième surface se rétrécissant (28) de l'élément de saisie de tube (8) permet d'obtenir un effet de came qui pousse positivement les extrémités (15) entrant en contact avec le tube radialement vers l'extérieur et hors de prise avec le tube (T).

24. Procédé, tel que revendiqué dans la revendication 23, **caractérisé en ce que** l'instrument de libération (21) entoure essentiellement le tube (T).

25. Procédé, tel que revendiqué dans la revendication 23 ou 24, **caractérisé en ce que** l'instrument de libération (21) comprend un élément au moins partiellement tubulaire (22) dont le diamètre interne est légèrement supérieur au diamètre externe du tube (T), ledit élément au moins partiellement tubulaire (22) étant coulissé le long de la surface externe du tube (T) dans le sens axial.

26. Procédé, tel que revendiqué dans la revendication 23, 24 ou 25, **caractérisé en ce que** l'instrument de libération (21) est placé sur le tube (T) dans le sens latéral.

27. Procédé, tel que revendiqué dans la revendication 26, **caractérisé en ce que** l'instrument de libération (21) comprend deux parties qui peuvent passer d'un état ouvert, où l'instrument de libération est placé sur le tube (T), à un état fermé où l'instrument encercle au moins partiellement le tube (T).

28. Procédé, tel que revendiqué dans l'une quelconque des revendications 23 à 27, **caractérisé en ce que** le tube (T) est espacé de l'embouchure (7) du couplage de façon à permettre l'accès dans le couplage à l'aide de l'instrument de libération (21).

29. Procédé, tel que revendiqué dans la revendication 23, **caractérisé en ce que** ce qu'il est mis en oeuvre à l'aide d'un système tel que revendiqué dans l'une quelconque des revendications 1 à 22.

30. Couplage de tube comprenant un corps principal (1) qui possède une région (2) définissant un alésage dans le corps principal dans lequel le tube (T) vient se loger, et qui possède également une partie d'extrémité (6 ; 30) dont une partie définit une embouchure (7) pour l'alésage à travers lequel le tube passe ; dans lequel :
l'alésage comporte un joint (4) pour assurer l'étanchéité autour de la surface externe du tube (T) ; un élément de saisie de tube (8) sous forme d'anneau fendu est disposé entre le joint et l'embouchure de l'alésage, l'élément de saisie de tube étant contenu entièrement dans le corps (1) et ayant des extrémités (15) entrant en contact avec le tube afin de saisir la surface externe du tube ; une partie de la partie d'extrémité (6 ; 30) possède une première surface (9; 9') qui se rétrécit radialement vers l'intérieur dans la direction allant de l'intérieur du couplage vers l'embouchure (7) ; l'élément de saisie de tube (8) peut se déplacer axialement dans le couplage et possède une seconde surface (10) orientée radialement vers l'extérieur qui se rétrécit radialement vers l'intérieur dans la direction allant de l'intérieur du couplage vers l'embouchure (7), laquelle seconde surface (10) entre en interaction avec la première surface (9 ; 9') de la partie d'extrémité de sorte que, lors d'un mouvement axial de l'élément de saisie de tube en direction de l'embouchure (7) de l'alésage, le contact entre les première et seconde surfaces pousse les extrémités (15) entrant en contact avec le tube de l'élément de saisie de tube radialement vers l'intérieur de façon à accroître la prise sur le tube ; et l'élément de saisie de tube (8) possède une troisième surface (28) qui est placée radialement vers l'extérieur des extrémités (15) entrant en contact avec le tube ; et dans lequel le système est tel que, lors de l'utilisation, un instrument de libération (21) qui est distinct du couplage, peut être placé sur un tube (T) de manière à encercler au moins partiellement le tube et peut être déplacé axialement le long du tube (T) de sorte qu'une partie d'extrémité (29) de l'instrument de libération (21) entre en contact avec la troisième surface (28) de l'élément de saisie de tube (8) et de sorte que, en réponse au mouvement axial de l'instrument de libération, les extrémités (15) entrant en contact avec le tube ne sont plus en prise avec le tube ; **caractérisé en ce que** la partie d'extrémité du couplage comprend un élément d'extrémité (6 ; 30) qui ne fait pas partie intégrante du corps principal (1) mais qui est attaché à une extrémité du corps principal, des parties de l'élément d'extrémité (6 ; 30) définissant l'embouchure (7) de l'alésage et la première surface (9 ; 9') ; **en ce que** la troisième surface (28) de l'élément de saisie de tube (8) est orientée radialement vers l'intérieur et se rétrécit radialement vers l'extérieur dans une direction allant de l'intérieur du couplage vers l'embouchure (7) ; **en ce que** l'élément de saisie de tube (8) comprend un corps plastique résilient (11) dans lequel est noyé un insert métallique (12) formant des dents métalliques espacées circonférentiellement (15) qui dépassent du corps plastique de manière à former les extrémités entrant en contact avec le tube, le corps plastique (11) comprenant, du côté faisant face à l'embouchure (7), la seconde surface orientée radialement vers l'extérieur (10) autour de sa circonférence externe et la troisième surface orientée radialement vers l'intérieur (28) autour de sa circonférence interne ;
et caractérisé également **en ce que** le système est tel que, lors de l'utilisation, l'interaction entre la partie d'extrémité (29) de l'instrument de libération (21) et la troisième surface se rétrécissant (28) de l'élément de saisie de tube (8) permet d'obtenir un effet de came qui pousse positivement les extrémités (15) entrant en contact avec le tube radialement vers l'extérieur et hors de prise avec le tube (T).

31. Couplage de tube, tel que revendiqué dans la revendication 30, **caractérisé en ce que** l'embouchure (7) du couplage comprend plusieurs protubérances dirigées vers l'intérieur (19) et offrant un support au tube (T), les protubérances (19) étant séparées par des espaces (20) pour recevoir les pattes (27) de l'instrument de libération (21).

32. Couplage de tube, tel que revendiqué dans la revendication 30 ou 31, **caractérisé en ce que** la première surface (9 ; 9'), la seconde surface (10) et la troisième surface (28) sont en forme de cône tronqué.

33. Couplage de tube, tel que revendiqué dans la revendication 30, 31 ou 32, **caractérisé en ce que** le corps plastique (11) comporte plusieurs encoches s'étendant radialement (13) qui sont espacées autour de sa circonférence interne, les dents métalliques (15) se trouvant sur des parties du corps plastique (11) entre les encoches (13).

34. Couplage de tube, tel que revendiqué dans la revendication 33, **caractérisé en ce qu'**une partie de la troisième surface (28) se situe sur chacune des parties du corps plastique (11) entre les encoches (13).
